# EUROPÄISCHE PATENTANMELDUNG

(11) **EP 1 029 737 A1**
(43) Veröffentlichungstag der Anmeldung: **23.08.2000**
(21) Anmeldenummer: 99810154.7
(22) Anmeldetag: 19.02.1999
(51) Int. Cl.: B60P 3/07, B60P 3/42

(54) **Verfahren für den Gütertransport sowie Anordnung zur Durchführung des Verfahrens**

(71) Anmelder: Steiner, Frank, 3210 Kerzers (CH)
(72) Erfinder: Steiner, Frank, 3210 Kerzers (CH)
(74) Vertreter: Roshardt, Werner Alfred, Dipl.-Phys.

(57) **Zusammenfassung**

Bei einem Verfahren für den Transport von Gütern wird das Transportgut mittels eines ersten (110) und eines zweiten (150) Lastkraftwagens von einem Ausgangsort zu einem Bestimmungsort transportiert und am Bestimmungsort abgeladen. Nach dem Abladen des Transportguts am Bestimmungsort werden die beiden Lastkraftwagen (110, 150) für die Weiterfahrt zu einer durch einen einzigen Fahrzeugführer lenkbaren Fahrzeugeinheit vereinigt. Dadurch wird ein effizienter und kostengünstiger Transport von Gütern mittels Strassentransportfahrzeugen ermöglicht.

## Beschreibung

### Technisches Gebiet

Die vorliegende Erfindung betrifft ein Verfahren für den Transport von Gütern mittels Lastkraftwagen sowie eine Anordnung zur Durchführung des Verfahrens.

### Stand der Technik

Infolge der in neuerer Zeit durchgeführten Rationalisierungsmassnahmen beim Abbau von Rohstoffen und der Produktion von Gütern einerseits sowie der tendenziell ansteigenden Kosten für Strassentransporte andrerseits fällt der Anteil der Transportkosten an den Gesamtkosten für an einen Bestimmungsort geliefertes Transportgut zunehmend stärker ins Gewicht. Dies trifft insbesondere für gewichtsmässig relativ kostengünstiges Transportgut zu, wie z.B. Schüttgut für Baustellen in Form von Kies, Sand, Belagsmaterial, Schotter, Zement u.ä.; Getreide, Mehl, Flüssigkeiten, Gemüse, Früchte usw.

### Darstellung der Erfindung

Aufgabe der vorliegenden Erfindung ist die Angabe eines Verfahrens für einen effizienten und kostengünstigen Strassentransport von Gütern.

Die Lösung der Aufgabe ist Gegenstand der unabhängigen Patentansprüche.

Gemäss der Erfindung werden bei einem Verfahren für den Gütertransport zunächst das Transportgut mittels eines ersten und eines zweiten Lastkraftwagens von einem Ausgangsort zu einem Bestimmungsort transportiert und am Bestimmungsort abgeladen; anschliessend werden nach dem Abladen des Transportguts am Bestimmungsort die beiden Lastkraftwagen für die Weiterfahrt zu einer durch einen einzigen Fahrzeugführer lenkbaren Fahrzeugeinheit vereinigt.

Beim erfindungsgemässen Transportverfahren wird das Transportgut mittels zwei separaten Lastkraftwagen von einem Ausgangsort (beispielsweise einem Steinbruch) zu einem Bestimmungsort (beispielsweise einer Baustelle) transportiert, wobei die beiden Lastkraftwagen selbstverständlich durch zwei Fahrzeugführer (auch Lastwagenfahrer genannt) gelenkt werden. Unter einem Lastkraftwagen ist im folgenden irgend ein für der Gütertrasport auf der Strasse geeignetes Fahrzeug zu verstehen, wie z.B. ein mit einer Ladefläche oder einem Laderaum versehenes, Einzelfahrzeug, ein aus einer Zugmaschine und einem Sattelauflieger bestehender Sattelzug, ein Anhängerzug usw. Nach dem Abladen des Transportguts am Bestimmungsort werden die beiden vom Tranportgut entladenen Lastkraftwagen zu einer Fahrzeugeinheit vereinigt, die durch einen einzigen Fahrzeugführer lenkbar ist.

Dadurch können für die Weiterfahrt und/oder insbesondere die Rückfahrt der beiden Lastkraftwagen zum Ausgangsort zwei separate Leerfahrten der beiden Lastkraftwagen durch eine einzige Fahrt der Fahrzeugeinheit ersetzt werden, wobei sich einer der beiden Fahrzeugführer auf einem Beifahrersitz, in einer Ruhe- oder Schlafkabine eines der beiden Lastkraftwagen oder in der Lastkraftwagen-Führerkabine, die nicht zum Lenken der Fahrzeugeinheit benötigt wird, ausruhen kann. Die für die Weiterfahrt oder die Rückfahrt benötigte Zeit wird somit nur dem die Fahrzeugeinheit lenkenden Fahrzeugführer als aktive Fahrzeit angerechnet, während sie für den anderen Fahrzeugführer als Ruhezeit angerechnet wird. Da in den meisten Ländern die pro Tag zulässige aktive Fahrzeit eines Fahrzeugführers gesetzlich beschränkt ist, kann mit dem erfindungsgemässen Verfahren die durch zwei Fahrzeugführer erreichbare Betriebszeit von zwei Lastkraftwagen um bis zu 50% gesteigert werden. Zudem wird für das Zurücklegen einer bestimmten Wegstrecke durch die beiden vom Transportgut entladenen Lastkraftwagen beim Betrieb der beiden zu einer Fahrzeugeinheit vereinigten Lastkraftwagen deutlich weniger Treibstoff verbraucht als beim Betrieb der beiden Lastkraftwagen als separate, unabhängig voneinander fahrende Strassentransportfahrzeuge. Des weiteren sind die in einigen Ländern zu bezahlenden fahrzeugbezogenen Strassenverkehrsgebühren (beispielsweise die leistungsabhängige Strassenverkehrsabgabe LSVA in der Schweiz) beim Betrieb der beiden zu einer Fahrzeugeinheit vereinigten Lastkraftwagen geringer als beim Betrieb der beiden Lastkraftwagen als Einzelfahrzeuge. Das erfindungsgemässe Verfahren ermöglicht aufgrund der erwähnten Vorteile einen effizienten und kostengünstigen Transport von Gütern mittels Strassentransportfahrzeugen, wobei es sich beim Transportgut vorzugsweise um Massengüter in Form von Stückgut, Flüssigkeiten oder insbesondere von Schüttgut handelt.

Zur Bildung der Fahrzeugeinheit am Bestimmungsort kann der zweite Lastkraftwagen auf den ersten Lastkraftwagen verladen werden oder der zweite Lastkraftwagen mit dem ersten Lastkraftwagen zu einem Anhängerzug oder einem Sattelzug verbunden werden.

Eine Anordnung zur Durchführung des Verfahrens gemäss der Erfindung umfasst zwei für den Gütertransport ausgebildete Lastkraftwagen, die zu einer durch einen einzigen Fahrzeugführer lenkbaren Fahrzeugeinheit vereinigbar sind.

Gemäss einer bevorzugten Ausführungsart der Erfindung sind die beiden Lastkraftwagen identisch ausgebildet. Dies bringt den Vorteil mit sich, das ein Fuhrunternehmen mit einer Vielzahl von identisch ausgebildeten Lastkraftwagen gemäss dieser Ausführungsart der Erfindung die Lastkraftwagen zu beliebigen Paaren zusammenstellen kann, welche je den Gütertransport erfindungsgemäss ausführen können.

Vorzugsweise umfasst die Anordnung zur Durchführung des erfindungsgemässen Verfahrens zwei Lastkraftwagen, die je für das in einem bestimmten Land zugelassene maximale Gesamtgewicht ausgebildet sind. Dadurch kann der Gütertranpsort mit maximaler Effizienz durchgeführt werden.

Eine Anordnung zur Durchführung des erfindungsgemässen Verfahrens kann auch zwei nicht identisch ausgebildete Lastkraftwagen umfassen. Dabei kann die Ladefläche eines der beiden Lastkraftwagen derart kürzer und/oder schmaler als diejenige des anderen ausgebildet ist, dass der Lastkraftwagen mit der kleineren Ladefläche ohne weiteres auf die grössere Ladefläche des anderen Lastkraftwagens verladen werden kann. Ein Verladen des Lastkraftwagens mit der grösseren Ladefläche auf den anderen Lastkraftwagen ist in diesem Fall im allgemeinen nicht möglich. Um mit beiden Lastkraftwagen das maximal zugelassene Gesamtgewicht ausnutzen zu können, ist vorzugsweise der Laderaum des Lastkraftwagens mit der kleineren Ladefläche entsprechend höher ausgebildet als der Laderaum des anderen Lastkraftwagens.

Ein für den Gütertransport ausgebildeter und insbesondere für die Anordnung zur Durchführung des erfindungsgemässen Verfahrens geeigneter Lastkraftwagen zeichnet sich dadurch aus, dass er mit einem weiteren für den Gütertransport ausgebildeten Lastkraftwagen zu einer durch einen einzigen Fahrzeugführer lenkbaren Fahrzeugeinheit vereinigbar ist. Vorzugsweise ist mindestens eine Fahrzeugachse derart längsverschieblich am Lastkraftwagen angeordnet, dass durch eine Längsverschiebung dieser Fahrzeugachse die Distanz zwischen der vordersten und der hintersten Achse des Lastkraftwagens verkürzbar ist, um ein Verladen des Lastkraftwagens auf den weiteren Lastkraftwagen zu erleichtern. Für die Bereitstellung einer längsverschieblichen Fahrzeugachse ist der Lastkraftwagen vorteilhafterweise mit einem Fahrzeugchassis versehen. Der zur Aufnahme des Transportguts geeignete Laderaum kann als Mulde, Plattform oder geschlossener Behälter ausgebildet sein.

Weiter wird bevorzugt, dass der Lastkraftwagen ein Fahrzeugchassis aufweist mit einem hinteren Teil, der um eine horizontale Querachse abknickbar an einem vorderen Teil des Fahrzeugchassis angelenkt ist. Durch ein Abknicken des hinteren Chassisteils nach unten wird das Auffahren des weiteren Lastkraftwagens auf den mit dem knickbaren Chassis versehenen Lastkraftwagen erleichtert.

Gemäss einer weiteren bevorzugten Ausführungsart der Erfindung ist eine den Laderaum für das Transportgut auf dem Lastkraftwagen begrenzende Wand derart ausgebildet und um eine Querachse schwenkbar am Lastkraftwagen angelenkt, dass sie in ausgeschwenktem Zustand als Auffahrrampe zum Verladen des weiteren Lastkraftwagens auf den Lastkraftwagen verwendbar ist. Des weiteren kann eine andere oder die gleiche den Laderaum für das Transportgut begrenzende Wand derart ausgebildet und um eine Querachse schwenkbar am Lastkraftwagen angelenkt sein, dass sie in ausgeschwenktem Zustand als Verlängerung der Ladefläche des Lastkraftwagens verwendbar ist. Durch die Verlängerung der Ladefläche wird das Verladen des weiteren Lastkraftwagens auf die verlängerte Ladefläche erleichtert oder gar erst ermöglicht.

Vorzugsweise sind bei einem für die Durchführung des erfindungsgemässen Verfahrens geeigneten Lastkraftwagen zwei den Laderaum für den Transport von Flüssigkeiten oder Schüttgut begrenzende Seitenwände in Längsrichtung nach vorne verschiebbar und nach Art von Faltwänden zusammenfaltbar. Der Laderaum kann in diesem Fall z.B. als faltbarer Container, als textiler Flüssigkeitsbehälter oder als faltbarer Sack ausgebildet sein. Durch das Zusammenfalten der Seitenwände wird auf der Ladefläche des Lastkraftwagens Platz geschaffen, der zum Verladen des weiteren Lastkraftwagens genutzt werden kann. Dieser Aspekt der Erfindung erweist sich jedoch auch bei Lastkraftwagen als vorteilhaft, die nicht zum Verladen eines weiteren Lastkraftwagens vorgesehen sind. So kann beispielsweise ein Lastkraftwagen mit zwei zusammenfaltbaren Flüssigkeitsbehältern ausgerüstet werden, um auf der Hinfahrt von einem Ausgangsort zu einem Bestimmungsort in einem der Behälter Milch zu transportieren, während der andere Behälter zusammengefaltet ist. Auf der Rückfahrt kann dann im zuvor zusammengefalteten Behälter beispielsweise Heizöl transportiert werden, während der nun leere Milchbehälter zusammengefaltet ist. Als weiteres Beispiel kann der Lastkraftwagen für den kombinierten Transport von Milch und Mehl ausgebildet sein.

Ein Lastkraftwagen für die Anordnung zur Durchführung des erfindungsgemässen Verfahrens kann als Sattelzug mit einem Zugfahrzeug und einem mittels einer Kupplungsvorrichtung an das Zugfahrzeug gekuppelten Anhänger in Form eines Sattelaufliegers ausgebildet sein. Die Kupplungsvorrichtung kann - in für Sattelzüge an sich bekannter Art - eine am Zugfahrzeug angeordnete Sattelplatte mit einer Tasche zur Aufnahme eines am Anhänger angeordneten Königszapfens umfassen. Vorzugsweise ist die Sattelplatte derart längsverschieblich am Zugfahrzeug angeordnet, dass durch eine Längsverschiebung der Sattelplatte die Distanz zwischen der vordersten und der hintersten Achse des Lastkraftwagens verkürzbar ist. Dadurch wird das Verladen des Lastkraftwagens auf einen weiteren Lastkraftwagen erleichtert. Weiter wird bevorzugt, dass der Königszapfen derart längsverschieblich am Anhänger angeordnet ist, dass durch eine Längsverschiebung des Königszapfens die Distanz zwischen der vordersten und der hintersten Achse des Lastkraftwagens verkürzbar ist, was wiederum das Verladen des Lastkraftwagens auf einen weiteren Lastkraftwagen erleichtert. Durch die längsverschiebliche Anordnung der Sattelplatte und/oder des Königszapfens wird die Möglichkeit zur Verkürzung des Achsabstandes zwischen der vordersten und der hintersten Achse bei Lastkraftwagen geschaffen, die nicht mit einer längsverschieblichen Fahrzeugachse versehen sind, weil z.B. der Anhänger als chassisloses, selbstragendes Fahrzeug ausgebildet ist.

Vorzugsweise ist bei einem als Sattelzug ausgebildeten Lastkraftwagen für die erfindungsgemässe Anordnung die Kupplungsvorrichtung, mittels welcher der Sattelauflieger an das Zugfahrzeug gekuppelt ist, für Schwenkbewegungen um eine vertikale Schwenkachse blockierbar, wobei insbesondere die Möglichkeit zum Blockieren in einer üblicherweise für die Geradeausfahrt vorgesehenen Stellung des Anhängers bezüglich des Zugfahrzeugs bevorzugt wird. Dadurch kann das Rückwärtsfahren für ein Verladen des Lastkraftwagens auf den weiteren Lastkraftwagen erheblich erleichtert werden, weil dann der Sattelzug wie ein Einzelfahrzeug mit einem in Längsrichtung starren Chassis lenkbar ist.

Vorzugsweise sind bei einem für das erfindungsgemässe Verfahren geeigneten Sattelzug eine Vorderpartie und eine Hinterpartie des Anhängers derart ausgebildet, dass die Hinterpartie des Anhängers mit der Vorderpartie eines identisch ausgebildeten Anhängers eines weiteren Lastkraftwagens derart verbindbar ist, dass eine steife, gelenkfreie, verwindungsfeste und unverschiebliche Verbindung zwischen den beiden Anhängern geschaffen wird. Die solcherart miteinander verbundenen Anhänger können anschliessend durch das Zugfahrzeug des einen Sattelzuges gezogen werden, während das Zugfahrzeug des weiteren Sattelzuges auf den miteinander verbundenen Anhängern transportiert wird.

Die nachfolgende detaillierte Beschreibung der vorliegenden Erfindung dient in Verbindung mit den beiliegenden Zeichnungen nur als Beispiel für ein besseres Verständnis der Erfindung und ist nicht als Einschränkung des Schutzbereichs der Patentansprüche aufzufassen. Für den Fachmann sind aus der nachfolgenden Beschreibung in Verbindung mit den beiliegenden Zeichnungen und der Gesamtheit der Patentansprüche weitere vorteilhafte Ausführungsarten und Merkmalskombinationen ohne weiteres erkennbar, die jedoch immer noch innerhalb des Bereichs der vorliegenden Erfindung liegen.

### Kurze Beschreibung der Zeichnungen

Die Zeichnungen stellen bevorzugte Ausführungsarten der vorliegenden Erfindung dar. Es zeigen:

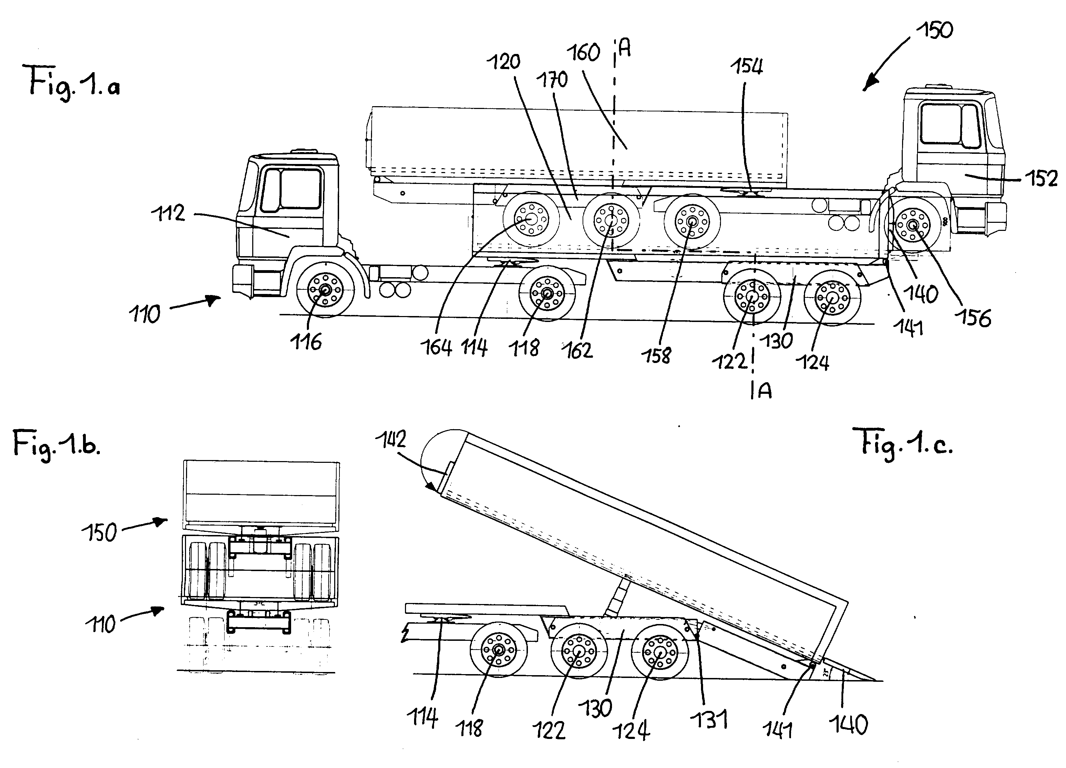

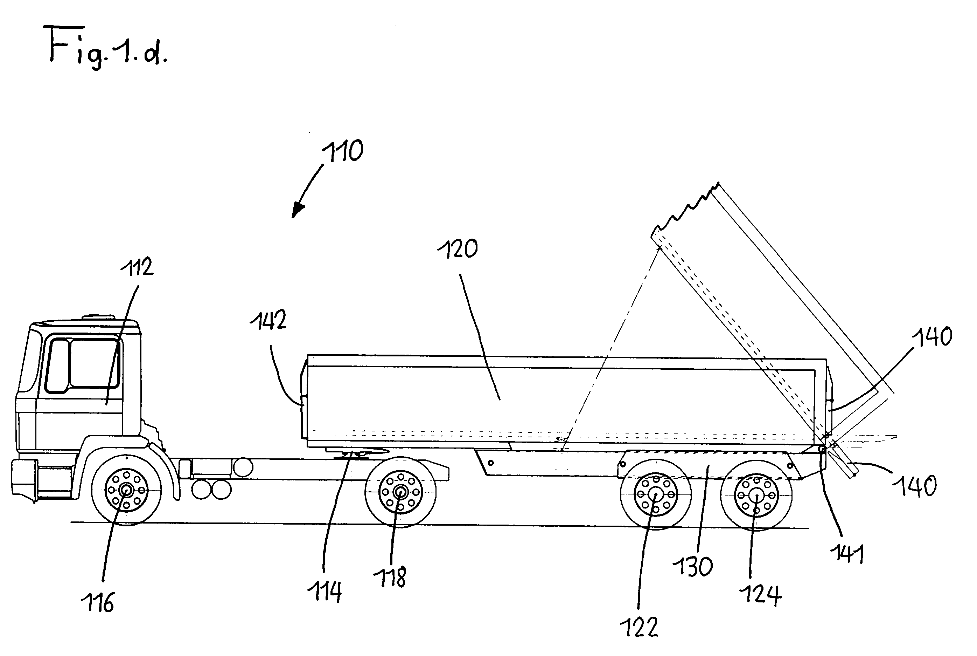

- Fig. 1.a: eine erste bevorzugte Ausführungsart einer Anordnung aus zwei Lastkraftwagen zur Durchführung des erfindungsgemässen Verfahrens in einer schematischen Seitenansicht;
- Fig. 1.b: einen Querschnitt entlang der Linie A - A durch die Anordnung in Fig. 1.a;
- Fig. 1.c: eine Seiten-Teilansicht des ersten Lastkraftwagens aus Fig. 1.a in einer Position, die zum Aufladen des zweiten Lastkraftwagens geeignet ist;
- Fig. 1.d: eine Seiten-Teilansicht des ersten Lastkraftwagens aus Fig. 1.a in einer Position, die zum Entleeren von Transportgut geeignet ist;
- Fig. 2.a: eine zweite bevorzugte Ausführungsart einer Anordnung aus zwei Lastkraftwagen zur Durchführung des erfindungsgemässen Verfahrens in einer schematischen Seitenansicht;

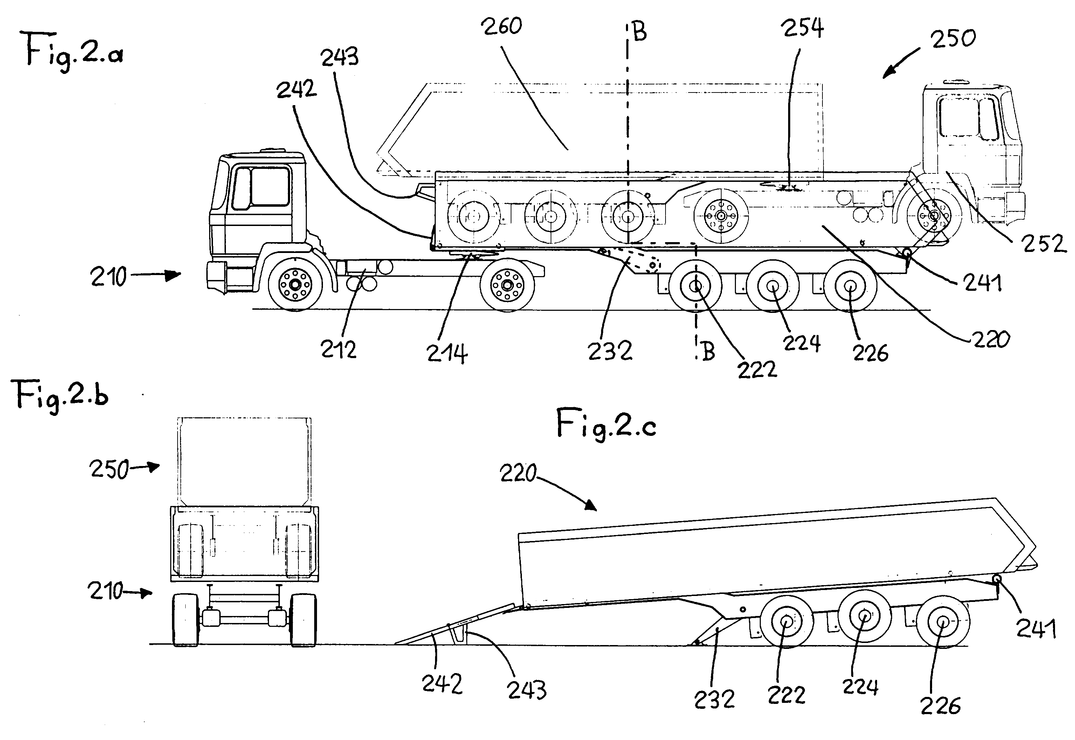

- Fig. 2.b: einen Querschnitt entlang der Linie B - B durch die Anordnung in Fig. 2.a;
- Fig. 2.c: eine Seiten-Teilansicht des ersten Lastkraftwagens aus Fig. 2.a in einer Position, die zum Aufladen des zweiten Lastkraftwagens geeignet ist;

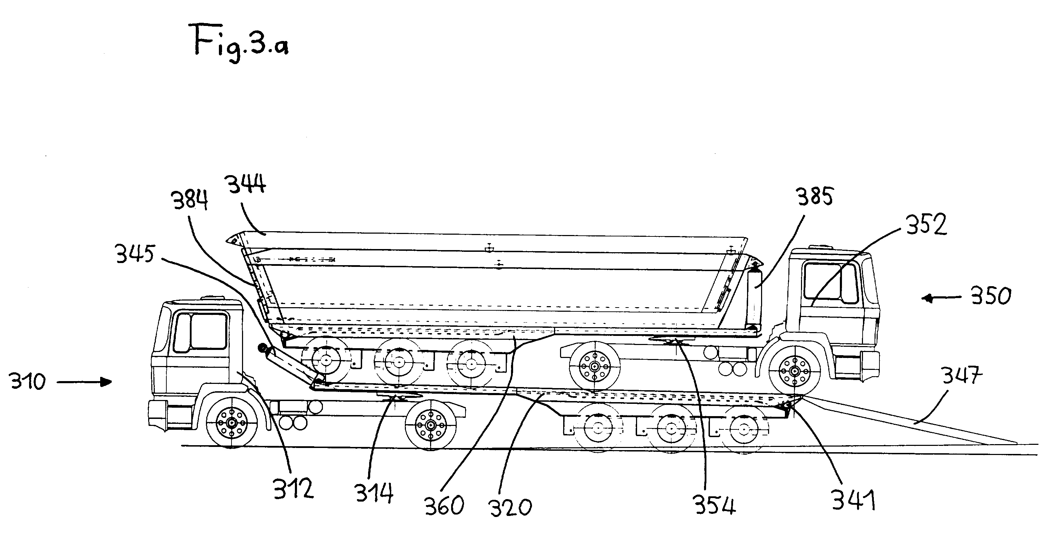

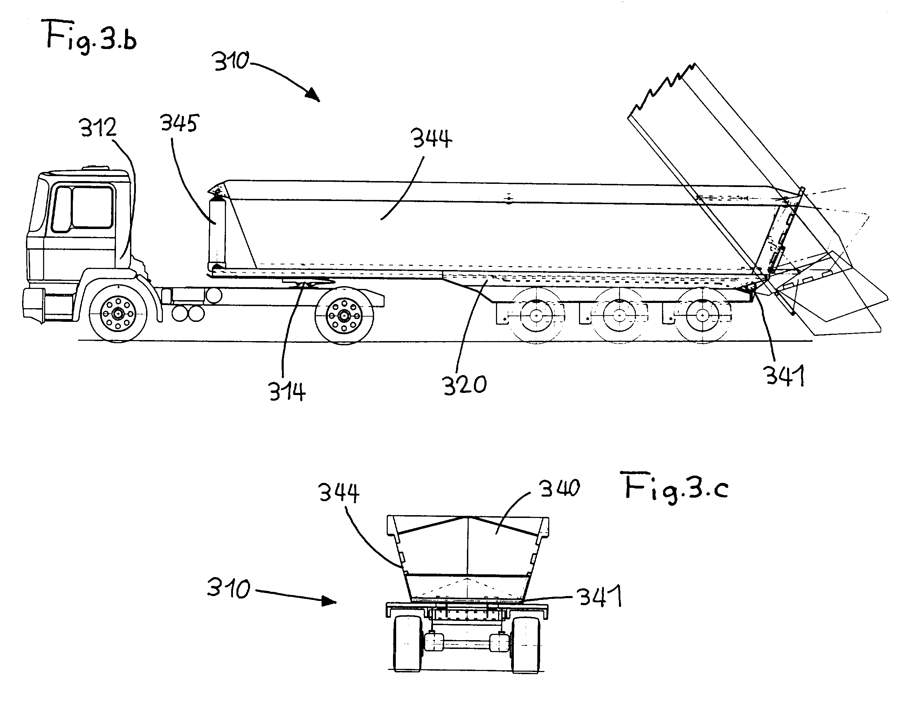

- Fig. 3.a: eine dritte bevorzugte Ausführungsart einer Anordnung aus zwei Lastkraftwagen zur Durchführung des erfindungsgemässen Verfahrens in einer schematischen Seitenansicht;
- Fig. 3.b: eine Seiten-Teilansicht eines Lastkraftwagens für die Anordnung in Fig. 3.a;
- Fig. 3.c: eine Hintenansicht des Lastkraftwagens in Fig. 3.b;

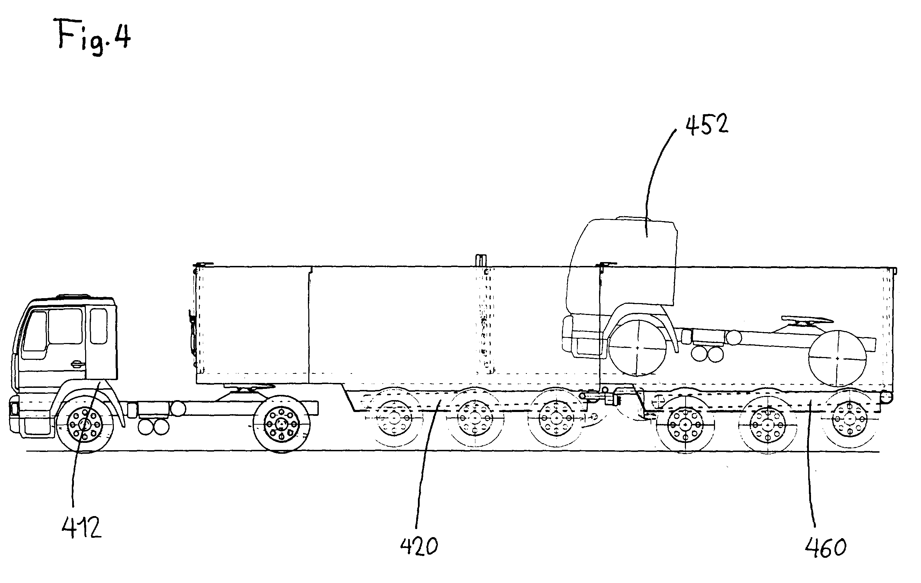

- Fig. 4: eine vierte bevorzugte Ausführungsart einer Anordnung zur Durchführung des erfindungsgemässen Verfahrens in einer vereinfachten schematischen Seitenansicht;

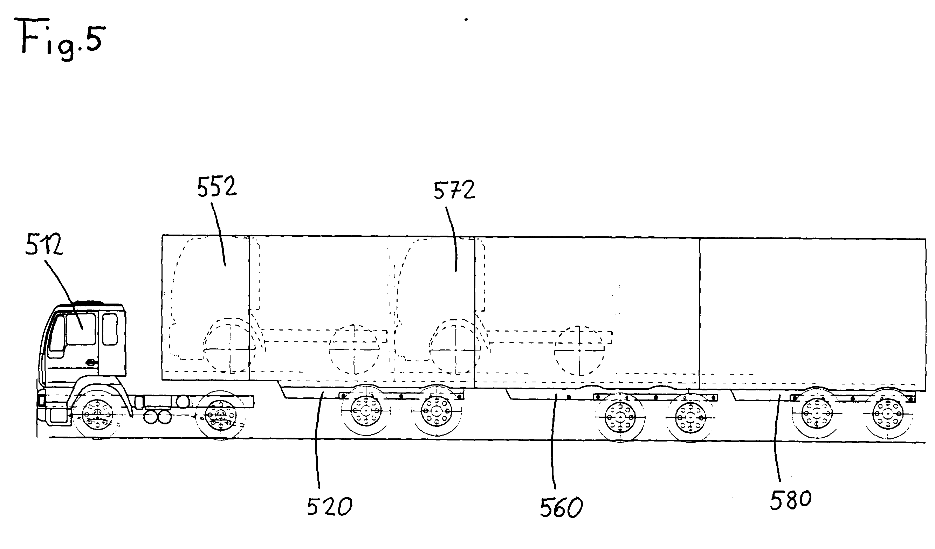

- Fig. 5: eine fünfte bevorzugte Ausführungsart einer Anordnung zur Durchführung des erfindungsgemässen Verfahrens in einer vereinfachten schematischen Seitenansicht.

Grundsätzlich sind in den Figuren gleiche Teile mit gleichen Bezugszeichen versehen.

### Wege zur Ausführung der Erfindung

### 1. Erste Ausführungsart einer erfindungsgemässen Anordnung

In den Figuren 1.a bis 1.d ist eine erste bevorzugte Ausführungsart einer Anordnung zur Durchführung des erfindungsgemässen Verfahrens dargestellt, die einen ersten Lastkraftwagen 110 und einen zweiten, zum ersten identischen Lastkraftwagen 150 umfasst. In den Figuren 1.a und 1.b sind die beiden Lastkraftwagen 110, 150 in einer Anordnung dargestellt, in welcher der zweite Lastkraftwagen 150 auf den ersten verladen ist, während in den Figuren 1.c und 1.d stellvertretend für die beiden identischen Lastkraftwagen 110, 150 Einzelheiten am Beispiel des ersten Lastkraftwagens 110 dargestellt sind. Weil die beiden Lastkraftwagen 110, 150 zueinander identisch sind, kann wahlweise der erste 110 auf den zweiten 150 oder der zweite 150 auf den ersten 110 verladen werden.

Die in den Figuren 1.a bis 1.d dargestellten Lastkraftwagen 110, 150 sind je als Sattelzug 110, 150 ausgebildet, d.h. sie umfassen je eine Zugmaschine 112, 152 (auch Zugfahrzeug, Sattelschlepper oder Traktor genannt) und einen Anhänger120, 160 in Form eines Sattelaufliegers. Das Zugfahrzeug 112, 152 und der Anhänger 120, 160 sind mittels einer für Sattelzüge 110, 150 gebräuchlichen Kupplungsvorrichtung zusammengekuppelt, wobei die Kupplungsvorrichtung eine am Zugfahrzeug 112, 152 angebrachte Sattelplatte 114, 154 und einen am Anhänger 120, 160 angebrachten Königszapfen umfasst, der mit der Sattelplatte 114, 154 zusammenwirkt.

Der Anhänger oder Sattelauflieger 120, 160 weist ein Fahrgestell 130, 170 mit zwei Achsen 122, 124, 162, 164 auf, wobei gemäss anderen Ausführungsarten der Erfindung selbstverständlich auch andere Anzahlen von Achsen möglich sind, so z.B. eine, drei oder vier Achsen. Das Anhänger-Fahrgestell 130, 170 mit den beiden Anhängerachsen 122, 124, 162, 164 ist in Längsrichtung verschieblich am Anhänger 120, 160 angeordnet. Bei den in den Figuren 1.a bis 1.d dargestellten Lastkraftwagen 110, 150 weist das Zugfahrzeug 112, 152 ebenfalls zwei Achsen 116, 118, 156, 158 auf, wobei die Sattelplatte 114, 154 längsverschieblich am Zugfahrzeug 110, 150 angeordnet ist.

Im beladenen Zustand, wie er in den Figuren 1.a und 1.b am Beispiel des ersten Sattelzuges 110 dargestellt ist, sind einerseits das Anhänger-Fahrgestell 130 am Anhänger 120 des ersten Sattelzuges 110 und andrerseits die Sattelplatte 114 am Zugfahrzeug 112 des ersten Sattelzuges 110 nach hinten verschoben, um eine günstige Gewichtsverteilung auf sämtliche Achsen des beladenen ersten Sattelzuges 110 zu erreichen. Das Anhänger-Fahrgestell 170 des auf den ersten Sattelzug 110 verladenen zweiten Sattelzuges 150 ist hingegen am zweiten Anhänger 160 nach vorne verschoben, um eine erste Verkürzung der Distanz zwischen der vordersten 156 und der hintersten Achse 164 des zweiten Sattelzuges 150 zu erreichen. Des weiteren ist die Sattelplatte 154 des zweiten Zugfahrzeuges 152 an diesem nach vorne verschoben, um eine weitere Verkürzung der Distanz zwischen der vordersten 156 und der hintersten Achse 164 des zweiten Sattelzuges 150 zu erreichen. Durch diese beiden Verkürzungsmassnahmen wird die Distanz zwischen der vordersten 156 und der hintersten Achse 164 des zweiten Sattelzuges 150 derart verkürzt, dass sämtliche Achsen des zweiten Sattelzuges 150 auf der Ladefläche des Sattelaufliegers 120 des ersten Sattelzuges 110 Platz haben, wenn diese wie nachfolgend beschrieben mit der ausgeklappten Heckwand 140 verlängert ist.

Die beiden in Fig. 1.a dargestellten Anhänger 120, 160 sind je mit einer kippbaren Ladefläche ausgerüstet, die einen im wesentlichen rechteckigen Grundriss aufweist. In Fig. 1.d ist der erste Lastkraftwagen 110 in einer Kipp-Position zum Entleeren von Transportgut mittels Kippen der Ladefläche dargestellt. Zum Kippen der Ladefläche ist auf dem Anhänger 120 ein hydraulischer Teleskopzylinder zwischen dem Anhängerchassis und der Ladefläche angeordnet und die Ladefläche an ihrem hinteren Rand um eine Kippachse 141 schwenkbar am Anghängerchassis angelenkt. Das Entleeren von Transportgut erfolgt auf für Kipplaster konventionelle Weise, indem die Ladefläche mittels des Teleskopzylinders bezüglich des Anhängerchassis angehoben und dadurch um die Kippachse 141 geschwenkt wird, bis das Transportgut aufgrund der Schwerkraft über den hinteren Rand der Ladefläche hinaus strömt.

Den Rändern der Ladefläche entlang sind eine Frontwand 142, eine Heckwand 140 und zwei Seitenwände an der Ladefläche angebracht, um für den Gütertransport einen geschlossenen Kastenrahmen auf der den Kastenboden definierenden Ladefläche zu bilden. Die Breite der Ladefläche übertrifft die Aussenbreite des Fahrwerks des Zugfahrzeugs 112 und des Anhängers 120, und sie ist derart bemessen, dass der zu verladende zweite Sattelzug 150 mitsamt seinem Chassis und Fahrwerk auf der Ladefläche des Anhängers 120 des ersten Sattelzuges 110 Platz hat. Bei dem in den Figuren 1.a bis 1.d dargestellten Ausführungsbeispiel misst die Aussenbreite des Kastenrahmens ungefähr 2.5 m, die Innenbreite zwischen den beiden Seitenwänden ungefähr 2.4 m und die Aussenbreite des Fahrwerks ungefähr 2.3 m. Des weiteren ist die Höhe der beiden Seitenwände bezüglich der Ladefläche (ca. 1.0 m) derart bemessen, dass sie kleiner ist als die lichte Höhe der Ladefläche über der Strassenfahrbahn (ca. 1.1 m). Dadurch ist die mit den Wänden versehene Ladefläche des Anhängers 120 des ersten Sattelzuges 110 mit dem zweiten Anhängerzug 150 befahrbar, wobei die Ladefläche des Anhängers 160 des zweiten Sattelzuges 150 oberhalb der Oberkanten der Anhängerwände des ersten Sattelzuges 110 zu liegen kommt.

Die Frontwand 142 des Anhängers des ersten Sattelzuges ist ungefähr auf halber Höhe zweigeteilt, wobei die beiden Teile mittels eines horizontalen Scharniergelenks miteinander verbunden sind. Dadurch kann die obere Hälfte der Frontwand 142 um das Scharniergelenk herum nach unten umgeklappt werden, um Platz zum Verladen des zweiten Lastkraftwagens 150 zu schaffen.

Die Heckwand 140 ist multifuktional ausgebildet, indem sie als Wand für der Laderaum, als Verlängerung der Ladefläche und als Auffahrrampe verwendbar ist. Zu diesem Zweck ist die Heckwand 140 an ihrem unteren Rand um ein unteres Scharniergelenk herum umklappbar am hinteren Rand der Ladefläche angelenkt. In hochgeklapptem Zustand dient die Heckwand 140 als Rückwand des Laderaums. In ausgeklapptem Zustand dient die Heckwand 140 als Verlängerung der Ladefläche des Anhängers 120 des ersten Sattelzuges 110, wenn auf diesem der zweite Sattelzug 150 aufgeladen ist, wie in der Fig. 1.a zu sehen ist. Zudem dient die ausgeklappte Heckwand 140 als Auffahrrampe zum Verladen des zweiten auf den ersten Sattelzug, wie in der Figur 1.c zu erkennen ist. Des weiteren ist die Heckwand 140 auf ähnliche Weise wie die Frontwand 142 ungefähr auf halber Höhe zweigeteilt, wobei die beiden Teile mittels eines mittleren horizontalen Scharniergelenks miteinander verbunden sind. Zum Entleeren von Transportgut wird zunächst die obere Hälfte der Heckwand 140 um das mittlere Scharniergelenk herum nach unten umgeklappt, um Länge der Heckwand 140 ungefähr zu halbieren, und anschliessend die Heckwand 140 mit halbierter Länge aufgeklappt, um den Kastenrahmen zum Entleeren des Transportguts zu öffnen. Anschliessend wird die Ladefläche angehoben und das Transportgut entleert. Durch die Halbierung der Länge der Heckklappe 140 wird vermieden, dass diese beim Entleeren von Transportgut auf dem Boden oder an einem Behälter, in welchen das Transportgut zu entleeren ist, ansteht.

In Fig. 1.c ist der erste Lastkraftwagen 110 in einer Verladeposition zum Aufladen des zweiten Lastkraftwagens 150 dargestellt. Wie in Fig. 1.c zu erkennen ist, ist bei nach vorne verschobenem Anhänger-Fahrgestell 130 das Anhängerchassis des ersten Sattelzuges um eine horizontale Knickachse 131 knickbar, um das Auffahren des zweitens Lastkraftwagens 150 auf die Ladefläche des ersten Lastkraftwagens 110 zu erleichtern.

Zum Aufladen des zweiten Sattelzuges 150 auf den ersten 110 wird zunächst das Fahrgestell 130 am Anhängerchassis des ersten Sattelzuges 110 nach vorne geschoben. Dann wird die auf gebräuchliche Art in vertikaler Richtung verstellbare Sattelplatte 114 am Zugfahrzeug 112 des ersten Sattelzuges 110 maximal angehoben und mittels Luftfederung die vordere Anhängeachse 122 des ersten Sattelzuges 110 maximal abgesenkt und die hintere Anhängerachse 124 des ersten Sattelzuges 110 maximal angehoben, um eine erste, nach hinten geneigte Schrägstellung der Ladefläche des ersten Sattelzuges 110 zu erreichen. Anschliessend wird die Schrägstellung der Ladefläche vergrössert, indem der hintere Teil des Anhängerchassis des ersten Sattelzuges 110 um die Knickachse 131 herum nach unten, bis auf den Boden geknickt und gleichzeitig die Ladefläche des ersten Sattelzuges 110 mittels des Teleskopzylinder zum Kippen soweit angehoben wird, dass die Ladefläche im wesentlichen parallel zum abgeknickten hinteren Teil des ersten Anhängerchassis liegt. Nun wird die Heckwand 140 des ersten Anhängers 120 um ihr unteres Scharniergelenk herum aufgeklappt, um eine Auffahrrampe zu bilden. In dieser Position ist der Anhänger 120 des ersten Sattelzuges 110 in Fig. 1.c dargestellt. Als nächstes wird der zu verladende zweite Sattelzug 150 derart manövriert, dass seine Heckseite vor die Auffahrrampe zu liegen kommt. Dann wird das Fahrgestell 170 am Anhängerchassis des zweiten Sattelzuges 150 nach vorne geschoben und die Sattelplatte 154 des zweiten Zugfahrzeuges 152 an diesem nach vorne verschoben, um die Distanz zwischen der vordersten 156 und der hintersten Achse 164 des zweiten Sattelzuges 150 zu verkürzen. Anschliessend wird der zweite Sattelzug 150 rückwärts über die Auffahrrampe auf die schräggestellte Ladefläche des ersten Anhängers 120 gefahren. Danach wird die Ladefläche auf dem ersten Sattelzug 110 mittels des Kipp-Teleskopzylinders abgesenkt und gleichzeitig der hintere Teil des Anhängerchassis des ersten Sattelzuges um die Knickachse 131 herum nach oben zurück geknickt, bis er wieder parallel zum vorderen Teil des Anhängerchassis angeordnet ist. Nun wird noch das Fahrgestell 130 am Anhängerchassis des ersten Sattelzuges 110 nach hinten zurück geschoben, um eine günstige Gewichtsverteilung auf sämtliche Achsen des ersten Sattelzuges 110 zu erreichen und die Stabilität des Anhängers 120 zu verbessern. Damit ist das Verladen des zweiten Sattelzuges 150 auf den ersten Sattelzug 110 abgeschlossen.

Für die Weiterfahrt der beiden Sattelzüge 110, 150 muss nun bloss noch der erste Sattelzug 110 gelenkt werden, während der zweite auf diesem mittransportiert wird.

Für das Abladen des zweiten Sattelzuges 150 vom ersten 110 werden im wesentlichen die oben beschriebenen Schritte zum Aufladen in umgekehrter Reihenfolge und Ausführungsrichtung ausgeführt.

Die beiden in den Figuren 1.a bis 1.d dargestellten Lastkraftwagen 110, 150 in Form von Sattelzügen sind je für das in Europa zugelassene maximale Gesamtgewicht von 36'000 kg für Zweiachsanhänger ausgebildet.

### 2. Zweite Ausführungsart einer erfindungsgemässen Anordnung

Die in den Figuren 2.a bis 2.c dargestellte Anordnung umfasst einen ersten Lastkraftwagen 210 und einen zweiten, auf den ersten verladbaren Lastkraftwagen 250. Im Gegensatz zu der in den Zeichnungen 1.a bis 1.d dargestellten Anordnung sind die in den Zeichnungen 2.a bis 2.c dargestellten Lastkraftwagen 210, 250 nicht identisch zueinander, und der erste Lastkraftwagen 210 ist nicht auf den zweiten Lastkraftwagen 250 verladbar.

Die in den Figuren 2.a bis 2.c dargestellten Lastkraftwagen sind je als Sattelzug mit einer Zugmaschine 212, 152 und einem Anhänger 220, 260 in Form eines Sattelaufliegers ausgebildet, wobei die Anhänger 220, 260 je drei konventionelle, in Längsrichtung unverschiebliche Achsen 222, 224, 226 aufweisen. Die Anhänger 220, 260 sind je mit einer kippbaren Mulde (auch Kippmulde genannt) für den Gütertransport ausgerüstet, die zum Zwecke des Kippens um eine im wesentlichen horizontale Querachse 241 an ihrem hinteren unteren Ende schwenkbar am Anhänger (d.h. am Sattelauflieger) des Sattelzuges angelenkt ist.

Damit der zu verladende zweite Sattelzug 250 in der Mulde des ersten Sattelzuges 210 Platz hat, ist diese länger und breiter bemessen als die Mulde des zweiten Sattelzuges 250. Umgekehrt ist - da beide der in den Figuren 2.a bis 2.c dargestellten Sattelzüge 210, 250 je für das in Europa zugelassene maximale Gesamtgewicht von 42'000 kg für Dreiachsanhänger ausgebildet sind - die Mulde des zweiten Sattelzuges 250 höher als diejenige des ersten, so dass beide Mulden im wesentlichen das gleiche Fassungsvolumen aufweisen.

Das Zugfahrzeug 212, 252 und der Anhänger 220, 260 der beiden Sattelzüge 210, 250 sind sind mittels einer für Sattelzüge gebräuchlichen, eine Sattelplatte 214, 254 und einen Königszapfen aufweisenden Kupplungsvorrichtung zusammengekuppelt. Bei dem zu verladenden zweiten Sattelzug 250 ist die Sattelplatte 254 längsverschieblich am Zugfahrzeug 252 angebracht. Zum Verladen des zweiten Sattelzuges 250 wird die Sattelplatte 254 am Zugfahrzeug 252 des zweiten Sattelzuges 250 an diesem nach vorne verschoben, um eine Verkürzung der Distanz zwischen der vordersten und der hintersten Achse des zweiten Sattelzuges 250 zu erreichen. In dieser verkürzten Position ist die Kupplungsvorrichtung derart blockiert, dass zwischen dem Zugfahrzeug 252 und seinem Sattelauflieger 260 keine Schwenkbewegung um eine vertikale Schwenkachse durch den Kupplungspunkt hindurch mehr möglich ist. Dies ist jedoch nicht weiter störend, da ja diese verkürzte Position bloss für den Transport des zweiten Sattelzuges 250 vorgesehen ist.

Beim ersten Sattelzug 210 ist die Sattelplatte 214 unverschieblich am Zugfahrzeug 212 angebracht. Eine Verkürzung der Distanz zwischen der vordersten und der hintersten Achse des ersten Sattelzuges 210 ist nicht erforderlich, da dieser Sattelzug 210 nicht zum Verladen auf einem anderen Lastkraftwagen vorgesehen ist.

Die Frontwand 242 der Mulde des ersten Sattelzuges 210 ist zugleich als Auffahrrampe zum Verladen des zweiten auf den ersten Sattelzug ausgebildet, wie in der Figur 2.c zu erkennen ist, welche den Anhänger 220 des ersten Sattelzuges 210 in einer Verladeposition zum Verladen des zweiten Sattelzuges 250 darstellt. Zu diesem Zweck ist die Frontwand 242 um ein Scharniergelenk umklappbar am vorderen unteren Rand der Mulde angelenkt und mit einem Bügel 243 versehen, der in ausgeklapptem Zustand der Frontwand 242 als Stütze für die durch die Frontwand 242 gebildete Auffahrrampe dient.

Zum Aufladen des zweiten Sattelzuges 250 auf den ersten werden zunächst zwei im vorderen Bereich am Anhängerchassis des ersten Sattelzuges angeordnete, motorisch (z.B. pneumatisch oder hydraulisch) antreibbare Stützbeine 232 nach unten geschwenkt, um den Anhänger 220 auf dem Boden abzustützen. Danach wird das Zugfahrzeug 212 vom Anhänger 220 des ersten Sattelzuges 210 entkuppelt und weggefahren. Anschliessend wird mittels Luftfederung die hinterste Anhängeachse 226 des ersten Sattelzuges 210 maximal abgesenkt und die mittlere 224 sowie die vordere Anhängerachse 222 des ersten Sattelzuges 210 maximal angehoben, um eine erste, nach vorne geneigte Schrägstellung des Anhängers 220 des ersten Sattelzuges 210 zu erreichen. Nun wird die Frontwand 242 um das Scharniergelenk am vorderen unteren Rand der Mulde aufgeklappt, um eine Auffahrrampe zu bilden. In dieser Position ist der Anhänger 220 des ersten Sattelzuges 210 in Fig. 2.c dargestellt.

Als nächstes wird der zu verladende zweite Sattelzug 250 derart manövriert, dass seine Frontseite vor die Auffahrrampe 242 zu liegen kommt. Dann wird die Sattelplatte 254 des Zugfahrzeuges 252 des zweiten Sattelzuges 250 an diesem nach vorne verschoben, um die Distanz zwischen der vordersten und der hintersten Achse des zweiten Sattelzuges 250 zu verkürzen. Anschliessend wird der zweite Sattelzug 250 vorwärts über die Auffahrrampe 242 in die Kippmulde des ersten Anhängers 220 gefahren. Danach wird der Anhänger 220 des ersten Sattelzuges 210 mittels der Luftfederung und der motorisch antreibbaren Stützbeine 232 wieder horizontal gestellt und die als Auffahrrampe dienende Frontwand 242 hochgeklappt. Anschliessend wird das Zugfahrzeug 212 des ersten Sattelzuges 210 zum Anhänger 220 gefahren und an diesen angekuppelt. Damit ist das Verladen des zweiten Sattelzuges 250 auf den ersten Sattelzug 210 abgeschlossen.

Für das Abladen des zweiten Sattelzuges 250 vom ersten werden im wesentlichen die oben beschriebenen Schritte zum Aufladen in umgekehrter Reihenfolge und Ausführungsrichtung ausgeführt.

Die in den Figuren 2.a bis 2.c dargestellte Ausführungsart der Erfindung ist insbesondere auch zur Anwendung bei chassislosen, d.h. selbstragenden Anhängern geeignet, da zum Verladen des zweiten Sattelzuges auf den ersten im Gegensatz zu der in den Figuren 1.a bis 1.d dargestellten Ausführungsart der Erfindung kein knickbares Chassis vorgesehen ist.

Die beiden in den Figuren 2.a bis 2.c dargestellten Sattelzüge 210, 250 sind zwar nicht identisch zueinander, und der erste 210 ist nicht auf den zweiten Sattelzug 250 verladbar. Bei Bedarf ist es jedoch selbstverständlich möglich, Sattelzüge zu konstruieren, die zu den in den Figuren 2.a bis 2.c dargestellten Sattelzügen 210, 250 ähnlich sind (d.h. mit einer als Auffahrrampe verwendbaren Frontwand und mit Stützbeinen sowie verstellbaren Anhängerachsen, die ein frontseitiges Absenken des losgekuppelten Anhängers ermöglichen) und gegenseitig mit identischen ausgebildeten Sattelzügen transportierbar sind.

### 3. Dritte Ausführungsart einer erfindungsgemässen Anordnung

Die in den Figuren 3.a bis 3.c dargestellte Anordnung umfasst einen ersten Lastkraftwagen 310 und einen zweiten, auf den ersten verladbaren Lastkraftwagen 350. Die beiden Lastkraftwagen 310, 350 sind identisch ausgebildet, so dass wahlweise der erste auf den zweiten oder der zweite auf den ersten verladen werden kann.

Die Lastkraftwagen 310, 350 sind je als Sattelzug mit einer Zugmaschine 312, 352 und einem Anhänger 320, 360 in Form eines Sattelaufliegers ausgebildet sind, wobei die Anhänger 320, 360 je drei konventionelle, in Längsrichtung unverschiebliche Achsen und eine für den Containertransport geeignete Ladefläche aufweisen. Das Zugfahrzeug 312, 352 und der Anhänger 320, 360 sind mittels einer Kupplungsvorrichtung zusammengekuppelt, wobei die Kupplungsvorrichtung eine längsverschieblich am Zugfahrzeug 312, 352 angebrachte Sattelplatte 314, 354 und einen unverschieblich am Anhänger 320, 360 angebrachten Königszapfen umfasst, der mit der Sattelplatte 314, 354 zusammenwirkt.

Für den Gütertransport wird auf der Ladefläche eine kippbare Wechselmulde 344, 384 mittels konventioneller Containerverriegelungsvorrichtungen (typischerweise in Form von sogenannten Twist-Lock-Verriegelungen) angebracht. Zum Zwecke des Kippens ist die Wechselmulde 344, 384 weiter um eine im wesentlichen horizontale Querachse 341 an ihrem hinteren unteren Ende kippbar am Anhängerchassis angelenkt. Auf dem Anhänger 320, 360 ist ein hydraulischer Teleskopzylinder 345, 385 angeordnet, der zwischen dem Anhänger 320, 360 und der Mulde wirkt 344, 384, um die an ihrem hinteren unteren Rand um eine Kippachse 341 schwenkbar am Anghängerchassis angelenkte Wechselmulde 344.384 am vorderen Rand anzuheben und dadurch zum Entleeren von Transportgut zu kippen. Der Teleskopzylinder 345, 385 ist im vordersten Bereich des Anhängers 320, 360 um eine horizontale Querachse schwenkbar an diesem angelenkt. Dadurch kann zum Verladen des zweiten Sattelzuges 350 der Teleskopzylinder 345 auf dem Anhänger 320 des ersten Sattelzuges 310 nach vorne geschwenkt werden, um Platz für den zu verladenden zweiten Sattelzug 350 zu schaffen.

Es versteht sich von selbst, dass die Ladefläche mindestens gleich breit sein muss wie die Aussenbreite des Fahrwerks des Zugfahrzeugs 312, 352 und des Anhängers 320, 260, damit der zu verladende zweite Sattelzug 350 mitsamt seinem Chassis und Fahrwerk auf der Ladefläche des Anhängers 320 des ersten Sattelzuges 310 Platz hat. Bei dem in den Figuren 3.a bis 3.c dargestellten Ausführungsbeispiel misst die Breite der Ladefläche ungefähr 2.5 m und die Aussenbreite des Fahrwerks ungefähr 2.3 m.

Die in den Figuren 3.a bis 3.c dargestellten Wechselmulden 344, 384 für den Gütertransport haben eine konische Form, indem die Seitenwände von unten nach oben schräg nach aussen geneigt sind. Dadurch können die Wechselmulden 344, 384 nach Art von Blumentöpfen ineinander gestellt werden. Die Heckwand 340 der Mulden ist entlang einer vertikalen Mittellinie unterteilt, wobei die beiden Wandhälften nach Art von zwei Türflügeln je um ein Scharniergelenk schwenkbar am hinteren Rand einer Seitenwand der Mulde 344 angelenkt sind. Dadurch können die beiden Wandhälften der Heckwand je derart zur Seite geschwenkt werden, dass die Mulde heckseitig vollständig offen ist, wodurch ein Einschieben der zweiten Mulde durch die offene Hecköffnung der ersten hindurch in diese hinein ermöglicht wird. Die in den Figuren 3.a bis 3.c dargestellten Wechselmulden 344, 384 sind mit einem Seilzugmechanismus zum Öffnen der Heckwand versehen.

Zum Aufladen des zweiten Sattelzuges 350 auf den ersten 310 wird zunächst die Wechselmulde 344 des ersten Sattelzuges 310 in die Wechselmulde 384 des zweiten Sattelzuges 350 geschoben und die beiden ineinander geschobenen Wechselmulden 344, 384 auf der Ladefläche des zweiten Sattelzuges 350 verriegelt. Darauf wird am Heck der nun leeren Ladefläche des ersten Sattelzuges 310 eine Auffahrrampe 347 angeordnet und der zu verladende zweite Sattelzug 350 derart manövriert, dass seine Heckseite vor die Auffahrrampe 347 zu liegen kommt. Dann wird die Sattelplatte 354 des zweiten Zugfahrzeuges 352 an diesem nach vorne verschoben, um die Distanz zwischen der vordersten und der hintersten Achse des zweiten Sattelzuges 350 zu verkürzen. Falls nötig, wird nun der Teleskopzylinder 345 auf dem Anhänger 320 des ersten Sattelzuges 310 nach vorne geschwenkt, um Platz für den zu verladenden zweiten Sattelzug 350 zu schaffen. Anschliessend wird der zweite Sattelzug 350 rückwärts über die Auffahrrampe 347 auf die Ladefläche des ersten Anhängers 320 gefahren. Danach wird die Auffahrrampe 347 demontiert und auf dem Anhänger 320 des ersten Sattelzuges 310, vorzugsweise über den Rädern des Anhängers 320, verstaut. Damit ist das Verladen des zweiten Sattelzuges 350 auf den ersten Sattelzug 310 abgeschlossen.

Für das Abladen des zweiten Sattelzuges 350 vom ersten werden im wesentlichen die oben beschriebenen Schritte zum Aufladen in umgekehrter Reihenfolge und Ausführungsrichtung ausgeführt.

Bei einer weiteren Ausführungsform der Erfindung, die zu der in den Figuren 3.a bis 3.c dargestellten Ausführungsform ähnlich ist, sind die Wechselmulden durch Wechselcontainer ersetzt. Damit die Container zum Verladen eines ersten auf einen zweiten Lastkraftwagen ineinander verschachtelbar sind. können sie nach oben hin konisch zusammenlaufend ausgebildet sein, um sie nach Art von Hüten aufeinander stapeln zu können. Als Alternative dazu können die Container auch mit umklappbaren Seiten- und Frontwänden sowie mit einem demontierbaren Containerdach versehen sein, damit die leeren Container nach Art von zusammenklappbaren bzw. zusammenlegbaren Kisten zusammengeklappt werden können. Anschliessend können die beiden Leercontainer auf die Ladefläche des zu verladenden zweiten Lastkraftwagens und dieser auf die Ladefläche des ersten Lastkraftwagens verladen werden.

### 4. Vierte Ausführungsart einer erfindungsgemässen Anordnung

Die in den Fig. 4 dargestellte Anordnung umfasst einen ersten Lastkraftwagen und einen zweiten, auf den ersten verladbaren Lastkraftwagen. Die beiden Lastkraftwagen sind identisch ausgebildet, so dass wahlweise der erste auf den zweiten oder der zweite auf den ersten verladen werden kann.

Die Lastkraftwagen sind je als Sattelzug mit einer Zugmaschine 412, 452 und einem Anhänger 420, 460 in Form eines Sattelaufliegers ausgebildet sind, wobei die Anhänger 420, 460 je drei konventionelle, am Anhängerchassis hochziehbare Achsen aufweisen. Das Zugfahrzeug 412, 452 und der Anhänger 420, 460 sind mittels einer Kupplungsvorrichtung zusammengekuppelt, wobei die Kupplungsvorrichtung eine am Zugfahrzeug 412, 452 angebrachte Sattelplatte und einen am Anhänger 420, 460 angebrachten Königszapfen umfasst, der mit der Sattelplatte zusammenwirkt.

Für den Gütertransport ist der Anhänger 420, 460 mit einer im wesentlichen ebenen, rechteckigen Ladefläche versehen, deren Rändern entlang eine Frontwand, eine Heckwand und zwei Seitenwände angebracht sind, um für den Gütertransport einen geschlossenen Kastenrahmen auf der den Kastenboden definierenden Ladefläche zu bilden. Zum Entleeren des Transportguts ist auf dem Anhänger 420, 460 eine gebräuchliche Ausstossvorrichtung (nicht dargestellt) angeordnet.

Die Frontwand und die Seitenwände sind fest an der Ladefläche angebracht, während die Heckwand in Längsrichtung verschiebbar auf dem Anhänger 420, 460 angeordnet ist.

Die Vorderpartie der in Fig. 4 dargestellten identischen Anhänger 420, 460 ist derart ausgebildet, dass sie mit der Hinterpartie eines anderen Anhängers 420, 460 fest verbindbar ist. Zu diesem Zweck ist die Vorderpartie der Anhängerchassis in einer Seitenansicht schwanenhalsfömrig derart ausgebildet, dass sie über die Hinterpartie eines anderen Anhängerchassis geschoben werden kann, wobei beim Übereinanderschieben gleichzeitg entsprechend an den Anhängern 420, 460 angeordnete und ausgebildete Verbindungsprofile übereinandergreifend ineinander geschoben werden, um eine starre, verwindungs- und verschiebungsfeste Verbindung zwischen den Anhängern 420, 460 zu bilden. Die Seitenwände der Anhänger 420, 460 sind konisch nach vorne zusammenlaufend ausgebildet, damit die Seitenwände an der Vorderpartie des einen Anhängers 460 zwischen die Seitenwände an der Hinterpartie des anderen Anhängers 420 hinein geschoben werden können. Auf diese Art wird die Vorderpartie des Anhängers 460 des zweiten Sattelzuges fest mit der Hinterpartie des Anhängers 420 des ersten Sattelzuges verbunden.

Zum Aufladen des zweiten Sattelzuges auf den ersten werden zunächst Heckwände sowohl auf dem Anhänger 420 des ersten Sattelzuges als auch auf dem Anhänger 460 des zweiten, zu verladenden Sattelzuges nach vorne, zu den Frontwänden hin geschoben. Dann wird das Zugfahrzeug 452 des zweiten Sattelzuges von seinem Anhänger 460 entkuppelt und weggefahren. Nun wird mittels der Luftfederung die schwanenhalsförmige Vorderpartie des Anhängers 460 des zweiten Sattelzuges angehoben und mittels der Luftfederung die Hinterpartie des Anhängers 420 des ersten Sattelzuges abgesenkt. Als nächstes wird der erste Sattelzug derart manövriert, dass die abgesenkte Hinterpartie seines Anhängers 420 unter die angehobene Vorderpartie des Anhängers 460 des zweiten Sattelzuges geschoben wird, worauf die Vorderpartie des zweiten Anhängers 460 mit der Hinterpartie des ersten Anhängers 420 verbunden wird, um eine steife, gelenkfreie, verwindungsfeste und unverschiebliche Verbindung zwischen den beiden Anhängern 420, 460 zu schaffen. Danach wird am heckseitigen Ende des zweiten Anhängers 460 eine Auffahrrampe (nicht dargestellt) angeordnet und anschliessend das Zugfahrzeug 452 des zweiten Sattelzuges über die Auffahrrampe auf den zweiten Anhänger 460 gefahren und auf dem freien Teil von dessen Ladefläche abgestellt. Als nächstes werden die drei Achsen des Anhängers 420 des ersten Sattelzuges sowie die hinterste Achse des Anhängers 460 des zweiten Sattelzuges hochgezogen, um das Kurvenfahren mit der aus den beiden Sattelzügen gebildeten Fahrzeugeinheit zu ermöglichen. Nach dem Verstauen der Auffahrrampe auf einem den beiden Anhängern 420, 460 ist das Verladen des zweiten Sattelzuges auf den ersten Sattelzug abgeschlossen.

Für das Abladen des zweiten Sattelzuges vom ersten werden im wesentlichen die oben beschriebenen Schritte zum Aufladen in umgekehrter Reihenfolge und Ausführungsrichtung ausgeführt.

### 5. Fünfte Ausführungsart einer erfindungsgemässen Anordnung

Weil die in Fig. 4 dargestellte Anordnung identisch ausgebildete Sattelzüge umfasst, können theoretisch beliebig viele solcher Anhänger mittels der Schwanenhalsverbindungen miteinander verbunden werden.

In Fig. 5 ist in einer vereinfachten schematischen Darstellung eine Anordnung aus drei Sattelzügen, dargestellt, die ähnlich zu den in Fig. 4 dargestellten Sattelzügen ausgebildet sind und miteinander zu einer durch einen einzigen Fahrzeugführer lenkbaren Fahrzeugeinheit verbunden sind. Im Gegensatz zu der in Fig. 4 dargestellten Anordnung sind bei der in Fig. 5 dargestellten Anordnung die verladenen Zugfahrzeuge 512, 552, 572 vorwärts auf den freien Ladeflächen angeordnet. Das Zugfahrzeug 512 des ersten Sattelzuges dient als Zugfahrzeug für die aus den drei Sattelzügen gebildete Fahrzeugeinheit und zieht den Anhänger 520 des ersten Sattelzuges. Dieser ist an seiner Hinterpartie mit der Vorderpartie des Anhängers 560 des zweiten Sattelzuges verbunden, welcher seinerseits an seiner Hinterpartie mit der Vorderpartie des Anhängers 580 des dritten Sattelzuges verbunden ist. Das Zugfahrzeug 552 des zweiten Sattelzuges ist auf dem Anhänger 520 des ersten Sattelzuges und das Zugfahrzeug 572 des dritten Sattelzuges auf dem Anhänger 560 des zweiten Sattelzuges angeordnet, während der Anhänger 580 des dritten Sattelzuges leer ist.

Um das Kurvenfahren mit der aus den drei Sattelzügen gebildeten Fahrzeugeinheit zu ermöglichen, sind die zwei Achsen des Anhängers 520 des ersten Sattelzuges und die zwei Achsen des Anhängers 580 des dritten Sattelzuges hochgezogen, so dass die Fahrzeugeinheit bloss auf den Achsen des Zugfahrzeugs 512 des ersten Sattelzugesund den Achsen des Anhängers 560 des zweiten Sattelzuges fährt.

Zusammenfassend ist festzustellen, dass durch die Erfindung ein Verfahren für einen effizienten und kostengünstigen Strassentransport von Transportgut angegeben wird. Zudem werden durch die Erfindung eine Anordnung zur Durchführung des Verfahrens sowie ein Lastkraftwagen für diese Anordnung angegeben.

## Patentansprüche

1. Verfahren für den Gütertransport, bei welchem das Transportgut mittels eines ersten und eines zweiten Lastkraftwagens (110, 150) von einem Ausgangsort zu einem Bestimmungsort transportiert und am Bestimmungsort abgeladen wird, dadurch gekennzeichnet, dass nach dem Abladen des Transportguts am Bestimmungsort die beiden Lastkraftwagen (110, 150) für die Weiterfahrt zu einer durch einen einzigen Fahrzeugführer lenkbaren Fahrzeugeinheit vereinigt werden.

2. Verfahren nach Anspruch 1, dadurch gekennzeichnet, dass zur Bildung der Fahrzeugeinheit am Bestimmungsort der zweite Lastkraftwagen (150) auf den ersten Lastkraftwagen (110) verladen wird.

3. Verfahren nach Anspruch 1, dadurch gekennzeichnet, dass zur Bildung der Fahrzeugeinheit am Bestimmungsort der zweite Lastkraftwagen mit dem ersten Lastkraftwagen zu einem Anhängerzug verbunden wird.

4. Anordnung zur Durchführung des Verfahrens nach einem der Ansprüche 1 bis 3, mit zwei für den Gütertransport ausgebildeten Lastkraftwagen (110, 150; 210, 250; 310, 350) dadurch gekennzeichnet, dass die beiden Lastkraftwagen (110, 150; 210, 250; 310, 350) zu einer durch einen einzigen Fahrzeugführer lenkbaren Fahrzeugeinheit vereinigbar sind.

5. Anordnung nach Anspruch 4, dadurch gekennzeichnet, dass die beiden Lastkraftwagen (110, 150; 310, 350) identisch ausgebildet sind.

6. Anordnung nach Anspruch 4 oder 5, dadurch gekennzeichnet, dass die beiden Lastkraftwagen (110, 150; 210, 250; 310, 350) je für das in einem bestimmten Land zugelassene maximale Gesamtgewicht ausgebildet sind.

7. Für den Gütertransport ausgebildeter Lastkraftwagen (110; 210; 310), insbesondere für Anordnung nach einem der Ansprüche 4 bis 6, dadurch gekennzeichnet, dass er mit einem weiteren für den Gütertranpsort ausgebildeten Lastkraftwagen (150; 250; 350) zu einer durch einen einzigen Fahrzeugführer lenkbaren Fahrzeugeinheit vereinigbar ist.

8. Lastkraftwagen (150) nach Anspruch 7, dadurch gekennzeichnet, dass mindestens eine Fahrzeugachse derart längsverschieblich am Lastkraftwagen (150) angeordnet ist, dass durch eine Längsverschiebung dieser Fahrzeugachse die Distanz zwischen der vordersten und der hintersten Achse des Lastkraftwagens (150) verkürzbar ist, um ein Verladen des Lastkraftwagens (150) auf den weiteren Lastkraftwagen (110) zu erleichtern.

9. Lastkraftwagen (110) nach Anspruch 7 oder 8, gekennzeichnet durch ein Fahrzeugchassis mit einem hinteren Teil, der um eine horizontale Querachse (131) abknickbar an einem vorderen Fahrzeugchassisteil angelenkt ist, um durch ein Abknicken des hinteren Teils nach unten das Auffahren des weiteren Lastkraftwagens (150) auf den Lastkraftwagen (110) zu erleichtern.

10. Lastkraftwagen (110) nach einem der Ansprüche 7 bis 9, dadurch gekennzeichnet, dass eine den Laderaum für das Transportgut begrenzende Wand (140) derart ausgebildet und um eine Querachse schwenkbar am Lastkraftwagen (110) angelenkt ist, dass sie in ausgeschwenktem Zustand als Auffahrrampe (140) zum Verladen des weiteren Lastkraftwagens (150) auf den Lastkraftwagen (110) verwendbar ist.

11. Lastkraftwagen (110) nach einem der Ansprüche 7 bis 10, dadurch gekennzeichnet, dass eine den Laderaum für das Transportgut begrenzende Wand (140) derart ausgebildet und um eine Querachse schwenkbar am Lastkraftwagen (110) angelenkt ist, dass sie in ausgeschwenktem Zustand als Verlängerung der Ladefläche des Lastkraftwagens (110) verwendbar ist, um das Verladen des weiteren Lastkraftwagens (150) auf die Ladefläche des Lastkraftwagens (110) zu erleichtern.

12. Lastkraftwagen nach einem der Ansprüche 7 bis 11, dadurch gekennzeichnet, dass zwei den Laderaum für das Transportgut begrenzende Seitenwände in Längsrichtung nach vorne verschiebbar und nach Art von Faltwänden zusammenfaltbar sind, um durch ein Zusammenfalten der Seitenwände auf der Ladefläche Platz zum Verladen des weiteren Lastkraftwagens zu schaffen.

13. Lastkraftwagen (110, 150; 210, 250; 310, 350) nach einem der Ansprüche 7 bis 12, dadurch gekennzeichnet dass er als Sattelzug (110, 150; 210, 250; 310, 350) mit einem Zugfahrzeug (112, 152; 212, 252; 312, 352) und einem mittels einer Kupplungsvorrichtung an das Zugfahrzeug (112, 152; 212, 252; 312, 352) gekuppelten Anhänger (120, 160; 220, 260; 320, 360) in Form eines Sattelaufliegers ausgebildet ist, wobei die Kupplungsvorrichtung eine am Zugfahrzeug (112, 152; 212, 252; 312, 352) angeordnete Sattelplatte (114, 154; 214, 154; 314, 354) mit einer Tasche zur Aufnahme eines am Anhänger (120, 160; 220, 260; 320, 360) angeordneten Königszapfens umfasst.

14. Lastkraftwagen (150; 350) nach Anspruch 13, dadurch gekennzeichnet, dass die Kupplungsvorrichtung für Schwenkbewegungen um eine vertikale Schwenkachse blockierbar ist, um das Rückwärtsfahren für ein Verladen des Lastkraftwagens (150; 350) auf den weiteren Lastkraftwagen (110; 310) zu erleichtern.

15. Lastkraftwagen (150; 250; 350) nach Anspruch 13 oder 14, dadurch gekennzeichnet, dass die Sattelplatte (154; 254; 354) derart längsverschieblich am Zugfahrzeug (152; 252; 352) angeordnet ist, dass durch eine Längsverschiebung der Sattelplatte (154; 254; 354) die Distanz zwischen der vordersten und der hintersten Achse des Lastkraftwagens (150; 250; 350) verkürzbar ist, um ein Verladen des Lastkraftwagens (150; 250; 350) auf den weiteren Lastkraftwagen (110; 210; 310) zu erleichtern.

16. Lastkraftwagen nach einem der Ansprüche 13 bis 15, dadurch gekennzeichnet, dass der Königszapfen derart längsverschieblich am Anhänger angeordnet ist, dass durch eine Längsverschiebung des Königszapfens die Distanz zwischen der vordersten und der hintersten Achse des Lastkraftwagens verkürzbar ist, um ein Verladen des Lastkraftwagens auf den weiteren Lastkraftwagen zu erleichtern.

17. Lastkraftwagen nach einem der Ansprüche 13 bis 16, gekennzeichnet durch eine Ausbildung einer Vorderpartie und einer Hinterpartie des Anhängers (420) derart, dass die Hinterpartie des Anhängers (420) mit der Vorderpartie eines identisch ausgebildeten Anhängers (460) des weiteren Lastkraftwagens derart verbindbar ist, dass eine steife, gelenkfreie, verwindungsfeste und unverschiebliche Verbindung zwischen den beiden Anhängern (420, 460) geschaffen wird.
